# EUROPEAN PATENT SPECIFICATION

(11) **EP 3 340 186 B1**
(45) Date of publication and mention of the grant of the patent: **15.02.2023**
(21) Application number: 16206692.2
(22) Date of filing: 23.12.2016
(51) Int. Cl.: G06T 19/00, B25J 9/14, F15B 15/10

(54) **3D ADAPTIVE FORM SHAPING AND PROJECTING DEVICE, SYSTEM AND METHOD**
ADAPTIVE 3D-FORMGESTALTUNGS- UND PROJEKTIONSVORRICHTUNG, SYSTEM UND VERFAHREN
FAÇONNAGE ADAPTATIF DE FORME 3D ET DISPOSITIF, SYSTÈME ET PROCÉDÉ DE PROJECTION

(43) Date of publication of application: 27.06.2018
(73) Proprietor: Vestel Elektronik Sanayi ve Ticaret A.S., 45030 Manisa (TR); Özyegin Üniversitesi, 34794 Çekmeköy/ Istanbul (TR)
(72) Inventor: GÜLBAHAR, Burhan, 45030 Manisa (TR); MEMISOGLU, Görkem, 45030 Manisa (TR)
(74) Representative: Kehl, Ascherl, Liebhoff & Ettmayr Patentanwälte Partnerschaft mbB

(56) References cited:
- US-A- 4 661 039
- US-A1- 2008 188 709
- US-B1- 6 168 634

## Description

The present inventions refers to a device for 3D form generating according to claim 1, a system for 3D representation of an object having dynamic changes of the shape of its outer surface according to claim 12, a method for generating a dynamic 3D object according to claim 13 and a computer program product for executing said method according to claim 14.

The field of the invention is related to the "real 3D viewing experience" that can be used in projection systems, cybernetic applications, 3D chat environments, biomedical imaging, novel hologram display systems, 3D TVs, Sphere TVs, Cubic TVs, or other related TV systems.

Document US4661039A discloses an industrial robot which has a flexible frame or body and is constructed so as to have six degrees of freedom and a work envelope which is substantially free of dead spaces. A free end of the body includes an end effector for performing a task. To determine the position of the end effector within the work envelope and to displace the end effector according to the task requirements, a system is provided in which embedded microprocessors are interconnected with a signal transmitter located at the body free end and receivers fixed in their positions on the stationary base of the body. Continual monitoring of the end effector location is possible and adjustment in position may be made immediately. A remote computer linked to the microprocessors provides instructions for the operation and displacement of the robot. The degrees of freedom for the body are movement about a vertical axis, a horizontal axis and within a plane oriented so as to be in-line with the vertical axis and perpendicular to the horizontal axis. Actuating mechanisms are provided for effecting movement of the flexible body either sequentially or simultaneously about the two axes and within the plane. Movement by the flexible body within the plane is accomplished hydraulically with bladder actuators positioned along the length of the segmented body and connected for fluid communication between each other.

Document US6168634B1 discloses a hydraulically energized magnetorheological replicant muscle tissue as well as a system and method for using and controlling the same. The artificial muscle tissue is capable of causing motion, inducing force and enabling control thereof with life-like action. Numerous muscle tissue elements may be combined together to form a tissue capable of causing motion, inducing force and enabling control. Each muscle tissue element may receive fluid from a fluid supply. Control of fluid entering and exiting the muscle tissue element through valves may be effected using a central processing unit. As a result thereof, life-like action and artificial muscle tissue may be formed that replicates actual muscle tissue.

Further publications in the field are e.g. US2010316270A1, FR2838846A1, Chandrajit L. Bajaj, Edward J. Coyle, Kwun-Nan Lin, "Arbitrary Topology Shape Reconstruction from Planar Cross Sections," Computer Science Dept., Purdue University, West Lafayette, IN 47907, 35 pages and Dae Ho Lee, Joong Yull Park, Eun-Joong Lee, Yoon Young Choi, Gu Han Kwon, Beop-Min Kim, Sang-Hoon Lee, "Fabrication of three-dimensional microarray structures by controlling the thickness and elasticity of poly (dimethylsiloxane) membrane," Biomed Microdevices, vol. 12, pp. 49-54, 2010.

It is not possible to turn around the object on these screens, the object are not toucha-ble. Moreover, current projection systems either utilize 2D flat surfaces for showing arbitrary scenes or use fixed 3D models to ornament it with specific texture or patterns. They do not have any aim to create a real 3D display or object imitating the original counterpart.

Thus, the before mentioned prior art has the disadvantages that an exact/real 3D object formation cannot be established. The prior art depends on static 2D surfaces or 3D holographic volumes based on the light source originating from the screen and imitating reality. They do not provide the simultaneous 3D object forming synchronized with shapes of the remote objects, e.g., in a 3D chat application where the conservation is realized with 3D copies of the people as if they are real. Some of the previous art uses fixed 3D models to ornament it with specific texture or patterns, but, they have not any aim to create a real 3D display with dynamic form shaping or real objects imitating the original counterpart.

Thus, the object of the present invention is to provide a device, system and/or method which enables a better 3D viewing experience.

The before mentioned object is solved by a device for 3D form generating according to claim 1. Said device preferably comprises at least multiple at least sectionally hollow form changing elements. The form changing elements are preferably arranged in a stack like manner. The device further comprises a main hub for providing a material that is able to flow to the changing elements. Preferably at least the majority of the form changing elements are surrounding, in particularly fully or sectional, the main hub. Preferably each changing element is connected to the main hub. It is further or additionally conceivable that multiple form changing elements are grouped together and connected to the main hub. The device further comprises an actuator unit for causing material transfer of the material that is able to flow from or through the hub to the hollow section of the changing elements for adapting the outer surface of the device set up by the form changing elements. The device has a main central axis respectively main hub behaving as a skeleton of the object preferably carrying the material, in particular air, to fill the slices respectively form changing elements. The main hub or central axis needs not to be a simple structure but it can have branches to realize complicated 3D object appearances not only the ones which can be represented as layers of form changing element with mainly 2D cylindrical shapes.

This solution is beneficial since the device according to the present invention is supposed to give the real 3D viewing experience to the audience in a way that there is not any stereoscopic 3D environment realized with 2D screens and eyeglasses or any 3D holographic environment where a uniform medium is fed with light sources to create a illuminating 3D experience. In this solution, the object has a real surface and volume and it reflects light as in daily life experiences. In other words, it is similar to a robotic structure which can take the shape of any respectively many object/s while its skin is colored with lights projected from the projective devices. The object can be touched. May further be possible to turn it around and/or even carry it.

Further preferred embodiments are subject-matter of the pending claims and of the following parts of the description.

The form changing elements are made of an elastic material, in particular polymer material, according to a further preferred embodiment of the present invention. The form changing elements are additionally or alternatively individually connected or connectable to the main hub. Furthermore, the form changing elements are stacked or stackable in such a manner that most of the form changing elements are contacting two further form changing elements, wherein one further form changing element is arranged in axial direction of the stack contacting an upper section of a form changing element and wherein a second further form changing element is arranged in axial direction of the stack contacting a lower section of the same form changing element (which contacts the first form changing element). Each of these embodiments is beneficial since the concept of flexible elements mainly extending in two dimensions is very useful to form detailed surface properties.

At least 10 or at least 20 or at least 50 or at least 100 form changing elements are provided according to a further preferred embodiment of the present invention. The form changing elements are stacked by means or a positioning element, in particular a frame or sleeve. It is additionally or alternatively conceivable that individual form changing elements are glued together. Highly preferably each form changing element is connected to the main hub. Each form changing element extends in axial direction (stacking direction) less than 10mm or 5mm, in particular less than 3mm or less than 1,5mm or less than 1mm or less than 0,5mm or less than 0,1 mm or less than 0,05mm. This embodiment is beneficial since due to the number and size of form changing elements a high number or different field of usage can be addressed.

E.g. the invention can be used in technical environments like cybernetic applications to realize adaptive skins for robots. In 3D chat applications to set up a conversation with a real 3D model. Consumer and entertainment technologies where toys or some personal objects can be formed imitating real counterparts, e.g., human or animal bodies. Biomedical technology where 3D anatomical forms can be utilized by doctors to better diagnosis and treatment results.

The material which is able to flow is preferably a fluid, in particular a liquid material like oil or water or a gaseous material like air. This embodiment is beneficial since fluids can be pumped in a fast and highly controllable manner.

Each form changing element comprises or forms a membrane to prevent escape of the material able to flow according to a further preferred embodiment of the present invention. Additionally or alternatively the form changing elements are expanding or shrinking in radial direction (orthogonal to stacking direction). Preferably each slice is protected with such a membrane to prevent the escape of the medium. Moreover, the hole or each hole of each slice respectively form changing element is connected to an actuator unit, in particular a pump unit, which is electronically controlled. Thus, preferably the majority of all form changing element or each form changing element can be controlled electronically in real time to form real time shaping, in particular of the outer surface of all form changing elements.

A control unit is provided according to a further preferred embodiment of the present invention. The control unit preferably controls a valve unit and/or the actuator unit. The control unit controls material flow into and/or from respectively out of multiple changing elements at the same time. The valve unit and/or actuator unit is preferably controlled in dependency of a data set representing the shape of the outer surface of a reference object. The data set preferably provides data linked to the deformation or filling state of individual form changing elements. This embodiment is beneficial since a dynamic adaption of the surface can be caused, in particular in real time. A human face e.g. has multiple active muscles during talking or laughing, due to the present invention complex surface deformations occurring in such situations can be formed as 3D object or model.

According to the present invention a projecting unit is provided, wherein the projecting unit comprises multiple projecting devices for projecting light onto the outer surface of the object generated by the stack of form changing elements, wherein the projections can be applied to the surface of the object generated by the stack of form changing elements in dependency of coordinates of the said surface. The projecting devices are arranged in a preferably defined manner around the object generated by the stack of form changing elements.

A data source is provided according to a further preferred embodiment of the present invention, wherein the data source preferably provides source data, wherein the source data highly preferably comprises the data set representing the shape of the outer surface and/or modifications thereof and/or photo or video data to be projected on the object generated by the stack of form changing elements. The data source is a communication unit for transferring data via a communication path, in particular the internet, preferably in real time or a data medium, like a hard drive or CD or a data stick. The control unit preferably controls the projecting devices and/or the actuator unit and/or valve unit in synchronous manner, wherein changes of the shape of the outer surface of the object generated by the stack of form changing elements result in changes of the projection or vice versa.

Thus, the device respectively system mainly changes the shapes of elastic slices in a very fast pace while forming a 3D appearance similar to 3D printing mechanism forming a 3D object with 2D dynamic slices of varying radius. Furthermore, the resulting slices are colored with light projected from projective devices placed around the object. The slices are at rest initially and if 3D object model data is provided the motor pumps or contracts air, water or oil inside the slices in coordination with the projected colors on the surface of the object.

The present invention therefore comprises two major functions. The first major function is a design and utilizing of adaptive form shaping surfaces. The second major function is the usage of multiple projection devices in synchronization with form shaping elements, in particular form changing elements or slices.

The shape of the object changes respectively at least some form changing elements are actuated in a time interval of less than 5 seconds, in particular of less than 2 seconds, in particular of less than 1 second, in particular of less than 0,5 seconds. The projection unit projecting light on the surface of the object is synchronized with the form changing of the object respectively the actuation of the form changing elements.

The before mentioned object is also solved by a system for 3D representation of an object having dynamic changes of the shape of its outer surface. The system preferably comprises at least a device for 3D form generating, in particular according to any of claims 1 to 11, and a projection unit. The device hereby provides an object having an outer surface, wherein the shape of the surface of said object is adapted in dependency of data representing form changes of a reference object. The projection unit preferably comprises multiple projection devices for projection light onto the outer surface of the object, wherein the light is projected onto the surface of the object in dependency of said data representing form changes of the reference object. The data representing form changes of the reference object is preferably received over a communication path, in particular the internet or a telephone line or TV signal line. Photo or video data representing the colors and/or shades of said object is also transmitted via that communication path furthermore, related audio data and/or auxiliary data like text data can be transmitted via that communication path. The projecting unit preferably projects said photo or video data onto the object.

Thus, a real 3D technology is provided contrary to today's virtual 3D technology. The developed solution in this invention is preferably based on two building blocks; the first is the design and utilize adaptive form shaping surface and the second one is using the multiple projection devices in synchronization with form shaping slices. By this way, 3D printing the object is formed slice by slice, the sliced structure is preferably made of an elastic material such as polymer and each slice radius can be adjustable and are connected to the central backbone respectively main hub. As the other building block, the color and the light intensities corresponding to the surfaces of the slices are projected on the 3D surface by using multiple projection devices distributed around the object. Thanks to the good reflector like slices surfaces, high brightness is provided. The change of the object is synchronized with the projected 3D image; by the projection devices and backbone of the pressure control are connected with a network.

The mentioned object is further solved by a method for generating a dynamic 3D object according to claim 13.

44r This method preferably comprises the steps: Providing a device for 3D form generating, in particular according to any of claims 1 to 10, wherein the device provides an object having an outer surface; Providing an illumination unit, in particular a projection unit. The projection unit preferably comprises multiple projection devices for projection light onto the outer surface of the object. Adapting the shape of the surface of said object in dependency of data representing form changes of a reference object; and Adapting the illumination of, in particular the light projected onto, the surface of the object in dependency of said data representing form changes of the reference object.

The present invention further refers to a computer program product for executing a method according to claim 13.

Further benefits, goals and features of the present invention will be described by the following specification of the attached figures, in which components of the invention are exemplarily illustrated. Components of the device, systems and methods according to the inventions, which match at least essentially with respect to their function can be marked with the same reference sign, wherein such components do not have to be marked or described in all figures.

In the following the invention is just exemplarily described with respect to the attached figures.

### Brief Description of the Drawings

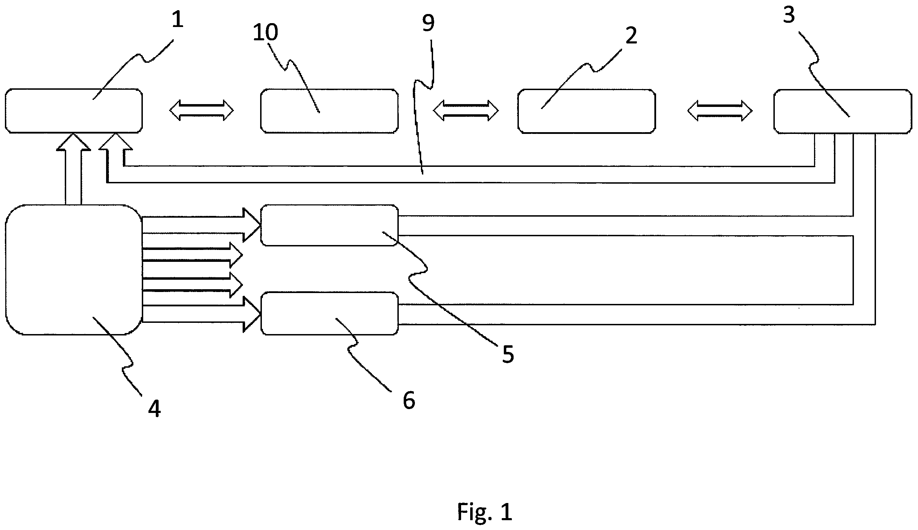

Fig. 1 shows a chart illustrating function interconnections of the present invention;
Fig. 2 shows how the form changing elements are arranged and an exemplarily shaped head /face of a person;
Fig. 3 shows an object formed by form changing elements and a projecting unit projecting light onto the object.

The system has preferably the following components, wherein each component has different tasks. Reference number 1 indicates an actuating unit. This actuating unit 1 respectively motor driver preferably controls, in particularly electronically, the filling of the form change elements 3 respectively slices of the object 11, in particular by pumping respectively actuation a pump unit 10. The object 11 is preferably formed by preferably 2D layers of form change elements 3 filled with air, water, oil or any other material. The term 2D layer hereby defines a form change element that extend into width and depth at least 5 times as long or at least 10 times as long or at least 20 times as long or at least 50 times as long as into height.

The actuator unit 1 is preferably connected or connectable with a pump unit 10. The pump unit 10 preferably pumps or shrinks air, water or oil as fast as at least 5, 10, 20, 50 or 100 operations/second in order to realize a realistic form where e.g. the eyes will sense as a continuous and static instantaneous object shape. Pumping and shrinking processes can preferably be carried out simultaneously.

The pump unit 10 is preferably connected respectively connectable with a main hub 2 or central axis. The main hub 2 preferably carriers a material or material composition that is able to flow, like air, water or oil, in particularly to the form changing elements 3, 31, 32 of the object. The main hub 2 can be considered as the skeleton of the 3D object 11. It is even possible that it can be mobile. It can have a very complicated structure including several branches depending on the object types to be formed. It is hereby conceivable that many different object types like human body parts or body parts of animals or products or parts of products are shaped with a device according to the present invention.

The main hub 2 is preferably directly or indirectly connected, in particularly fluidly connected, with one, some, a group of or multiple groups of or all form changing elements 3, 31, 32. The material that is able to flow is preferably transferred through the main hub 2 into the form changing elements 3, 31, 32 and/or transferred from the form changing elements 3, 31, 32 to the main hub 2, respectively through the main hub 2 to the pump unit 10.

The form changing elements 3, 31, 32 respectively 2D slices are preferably filled with air, water or oil, and composed of highly elastic substances preferably with high durability responding to pressure changes very fast and returning to the original shape without losing their elastic properties.

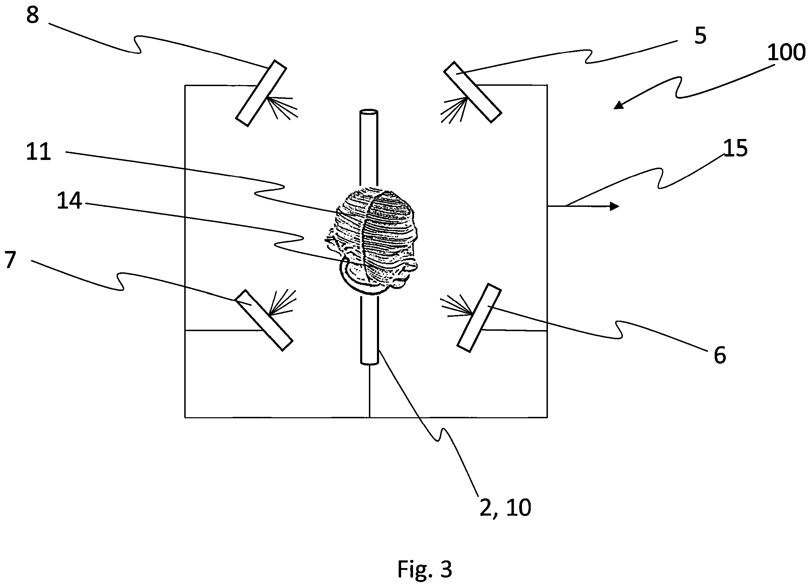

Reference number 5 and 6 are indicating devices of an illumination unit, in particular of a projection unit comprising multiple projective devices. They are projecting the 3D surface data of the object 11 to be formed onto the surfaces of the object 11 respectively onto the outer surface 14 of the form changing elements 3, 31, 32 in coordination with the actuation respectively pressure changes of the form changing elements 3, 31, 32. The color and the light intensities corresponding to the surfaces of the form changing elements 3, 31, 32 are projected on the 3D surface preferably by using multiple, in particular 2 or at least 2 or 3 or at least 3 or 4 or at least 4 projection devices 5, 6, 7, 8 distributed respectively arranged around the object 11. Therefore, realistic 3D appearance of the object 11 is realized by combining its shape with projected 3D image. The surfaces 14 of the form changing elements 3, 31, 32 are chosen as good reflectors to provide the maximum brightness. Furthermore, the projection devices 5, 6, 7, 8 and backbone of the pressure control are preferably connected with a network respectively communication unit 15 (cf. fig. 3) so that the change of the object 11 is synchronized with the projected 3D image.

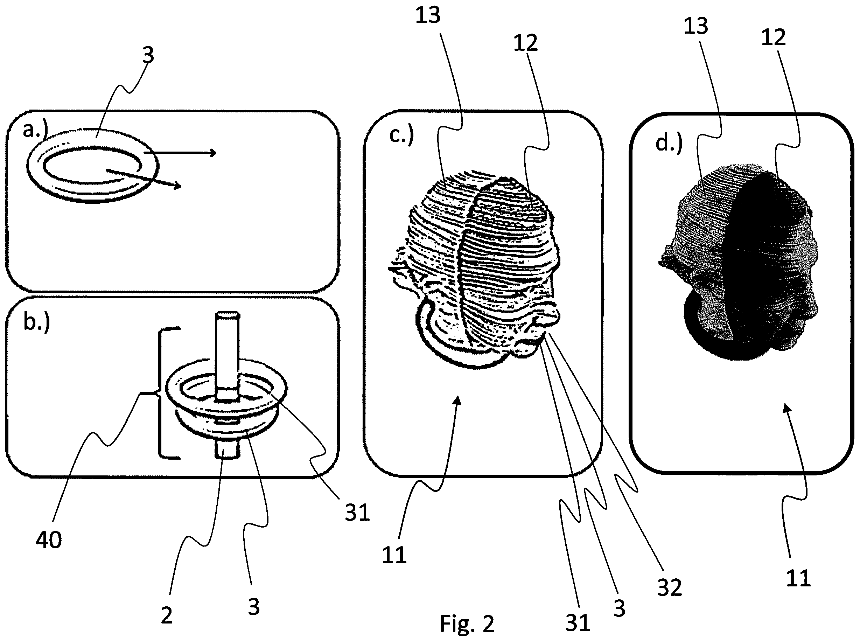

The first building block is described in Figs. 2(a), (b) and (c). Each form shaping element 3, 31, 32 is formed of an elastic material whose radius can be changed as indicated by arrows in Fig. 2(a). The slices 3, 31, 32 are preferably tightly connected to the central axis while there is not any interaction between neighbouring slices such that they can independently contract or expand in order to form 3D appearance

The change of radius is achieved by changing the pressure inside the hollow, in particular circular, volume. The pressure can be adapted by controlling the amount of the medium such as air, oil or water. The amount of these materials can be changed fast enough so that the human visual system senses a continuous change in the scene. The heights of the layers define the resolution of the form shaping device 100. The smaller height and larger number of slices respectively form changing elements 3, 31, 32 create objects 11 with more detail and more resolution. All these form changing elements 3, 31, 32 are connected to the central backbone respectively main hub 2 where the medium respectively material, e.g., air, oil or water. The main hub 2 preferably comprises at least one output and/or input hole providing flow of the medium inside the form changing elements 3, 31, 32. Fig. 2(b) indicates with reference number 40 that the height of the stack results from the comulated height of the individual form changing elements 3, 31, 32. The height of each form changing element 3, 31, 32 can be in the micrometer or millimeter range, in particular up to tenth or hundreds or thousands of micrometers or millimeters.

In Fig. 2(c), the sliced structure of the elastic material (such as polymer) based object 11 formation is shown. Similar to the 3D printing the object 11 is formed slice by slice respectively form changing element 3, 31, 32 by form changing element 3, 31, 32.

Furthermore, each form changing element 3, 31, 32 is preferably protected with a membrane to prevent the escape of the medium. Moreover, a hole respectively connector to the main hub 2 is preferably provided for each form changing element 3, 31, 32. The hole or connector for each form changing element 3, 31, 32 is connected to the pump unit 10 which is preferably electronically controlled. Each form changing element 3, 31, 32 can preferably be controlled electronically in real time to form real time shaping of the object 11.

In the second building block, the color and the light intensities corresponding to the surfaces of the slices are previously projected 12 on the 3D surface by using multiple projection devices 5, 6, 7, 8 distributed around the object 11. Therefore, realistic 3D appearance of the object 11 is realized by combining its shape with projected 3D image. The surfaces 14 of the form changing elements 3, 31, 32 are chosen as good reflectors to provide the maximum brightness. Furthermore, the projection devices 5, 6, 7, 8 and backbone of the pressure control are preferably connected with a network so that the change of the object 11 is synchronized with the projected 3D image. It is conceivable that the projecting devices 5, 6, 7, 8 are operated in such a manner that only one section of the surface of the object is lighted, wherein the section is preferably smaller, in particular at least 5% or 10% or 15% or 20% smaller than the outer surface of the object 11 set up by form changing elements 3, 31, 32.

Fig. 2d shows a photo of an example of an object 11 generated by the inventive device 100.

The skeleton of each object can be designed by another algorithm by using the 3D modelling data of the object. The skeleton can be formed of multiple parts resembling a tree structure which can be adaptively formed with a special mechanical design. Therefore, as the diameter of the leaves of the tree gets smaller the diameter of the slices will be smaller to form smaller details in the 3D model.

The slices are connected to the pumping axis as a cylindrical 3D structure with hole at the center where the diameter of the center is equal to the diameter of the pumping axis. The inner surface of the cylindrical slice with the hole includes two different regions. The upper and bottom parts of the inner surfaces are tightly connected to the axis in order to make the position of the slice stable. The middle part of the slice is empty and allows the fluidic connection with the pumping axis. Each slice can be controlled independently by a control unit placed before the empty fluidic hole inside the axis. The valves are the control units adapting the mechanical flow of the fluid for each individual slices.

Fig. 3 shows a 3D adaptive projection system, which can be used in factories, hospitals, schools, museums, AVMs, airports, etc. Furthermore, it can also be used in consumer electronics sector, health sector, military sector, etc.

This system is preferably connected to a communication unit 15 for data exchange with a further computing device, in particular for data exchange with a further device 100 according to the present invention. In case two or more than two devices 100 according to the present invention are functionally coupled by means of a communication unit 15, in particular an internet or Ian connection, the resulting arrangement can be considered as communication system. It is preferably conceivable that at least one camera unit, in particular a time of flight or real sense camera, is provided or present at every device 100 for capturing the shape changing of a surface of a real object, like a real human being. Said captured data is than preferably computed and transmitted via the communication unit 15 to one or multiple further devices 100, wherein that data preferably causes an actuation of the actuation unit and/or the projection unit of the one or multiple further devices 100.

Thus, the present invention refers to a device 100 for 3D form generating, in particularly a 3D Adaptive Form Shaping and Projective System is proposed. The inventive device comprises at least multiple at least sectionally hollow form changing elements 3, 31, wherein the form changing elements 3, 31, 32 are arranged in a stack like manner, a main hub 2 for providing a material that is able to flow to the changing elements 3, 31, 32, wherein at least the majority of the form changing elements 3, 31, 32 surrounds the main hub 2, wherein each form changing element 3, 31, 32 is connected to the main hub 2, an actuator unit 1 for causing material transfer of the material that is able to flow from the main hub 2 or through the main hub 2 to the hollow section of the form changing elements 3, 31, 32 for adapting the outer surface 14 of an object 11 set up by the form changing elements 3, 31, 32.

### Reference numbers

- 1: Actuator unit / motor driver
- 2: main hub / central axis
- 3: form changing element / slice units
- 4: 3D model of object
- 5: projection device 1
- 6: projection device 2
- 7: projection device 3
- 8: projection device 4
- 9: feedback
- 10: pump unit
- 11: 3D object
- 12: projection
- 13: surface of the object without projection
- 14: outer surface of object
- 15: communication unit / communication network
- 31: first further form changing element
- 32: second further form changing element
- 40: height
- 100: Device for 3D form generating

## Claims

1. Device (100) for 3D form generating,
at least comprising
multiple hollow form changing elements (3, 31),
wherein the form changing elements (3, 31, 32) are arranged in a stack like manner,
a main hub (2) for providing a material that is able to flow to the changing elements (3, 31, 32),
wherein at least the majority of the form changing elements (3, 31, 32) surrounds the main hub (2),
wherein each form changing element (3, 31, 32) is connected to the main hub (2),
an actuator unit (1) for causing material transfer of the material that is able to flow from the main hub (2) or through the main hub (2) to the hollow section of the form changing elements (3, 31, 32) for adapting the outer surface (14) of an object (11) set up by the form changing elements (3, 31, 32)
and
**characterised in that** a projecting unit is provided,
wherein the projecting unit comprises multiple projecting devices (5, 6, 7, 8) for projecting light onto the outer surface (14) of the object (11) generated by the stack of form changing elements (3, 31, 32),
wherein the projections can be applied to the surface (14) of the object (11) generated by the stack of form changing elements (3, 31, 32) in dependency of coordinates of the said surface.

2. Device according to claim 1,
**characterized in that**
the form changing elements (3, 31, 32) are made of an elastic material, in particular polymer material,
the form changing elements (3, 31, 32) are individually connected or connectable to the main hub (2) and
the form changing elements (3, 31, 32) are stacked in such a manner that most of the form changing elements (3, 31, 32) are contacting two further form changing elements, wherein one further form changing element (31) is arranged in axial direction of the stack contacting an upper section of the form changing element (3) and wherein a second further form changing element (32) is arranged in axial direction of the stack contacting a lower section of the form changing element (3).

3. Device according to claim 1 or claim 2,
**characterized in that**
at least 10 or at least 20 or at least 50 or at least 100 form changing elements (3, 31, 32) are provided and stacked,
wherein each form changing element (3, 31, 32) extends in axial direction less than 5mm, in particular less than 3mm or less than 1,5mm or less than 1mm or less than 0,5mm or less than 0,1 mm or less than 0,05mm.

4. Device according to any of the previous claims,
**characterized in that**
the material able to flow is a fluid, in particular a liquid material like oil or water or a gaseous material like air.

5. Device according to any of the previous claims,
**characterized in that**
each form changing element (3, 31, 32) comprises or forms a membrane to prevent escape of the material able to flow and/or
the form changing elements (3, 31, 32) are expanding or shrinking in radial direction.

6. Device according to any of the previous claims,
**characterized in that**
a control unit is provided,
wherein the control unit controls a valve unit and/or the actuator unit (1),
wherein the control unit controls material flow into and/or from multiple changing elements (3, 31, 32) at the same time,
wherein the valve unit and/or actuator unit is controlled in dependency of a data set representing the shape of the outer surface of a reference object,
wherein the data set provides data linked to the deformation or filling state of individual form changing elements (3, 31, 32).

7. Device according to any of the previous claims,
**characterized in that**
the projecting devices (5, 6, 7, 8) are arranged in a defined manner around the object (11) generated by the stack of form changing elements (3, 31, 32).

8. Device according to any of the previous claims,
**characterized in that**
a data source is provided,
wherein the data source provides source data,
wherein the source data comprises:
- the data set representing the shape of the outer surface and/or modifications thereof and
- photo or video data to be projected on the object generated by the stack of form changing elements (3, 31, 32).

9. Device according to claim 8,
**characterized in that**
the data source is a communication unit (15) for transferring data via a communication path, in particular the internet, preferably in real time
or
a data medium.

10. Device according to any of the previous claims,
**characterized in that**
the control unit controls the projecting devices (5, 6, 7, 8) and the actuator unit (1) and/or valve unit in synchronous manner, wherein changes of the shape of the outer surface (14) of the object (11) generated by the stack of form changing elements (3, 31, 32) result in changes of the projection or vice versa.

11. System for 3D representation of an object (11) having dynamic changes of the shape of its outer surface,
at least comprising
a device for 3D form generating (100) according to any of claims 1 to 10,
wherein the device (100) provides an object (11) having an outer surface (14),
wherein the shape of the surface (14) of said object (11) is adapted in dependency of data representing form changes of a reference object,
an illumination unit, in particular projection unit,
wherein the surface (14) of the object (14) is illuminated by the illumination unit in dependency of said data representing form changes of the reference object.

12. System according to claim 11,
**characterized in that**
the data representing form changes of the reference object is received over a communication path, in particular the internet or a telephone line or TV signal line,
wherein photo or video data representing the colors and/or shades of said object is also transferred via that communication path (15),
wherein the illumination unit illuminates the object surface in dependency of said photo or video data.

13. Method for generating a dynamic 3D object,
Providing a device for 3D form generating (100) according to any of claims 1 to 10,
wherein the device (100) provides an object (11) having an outer surface (14);
Providing an illumination unit, in particular a projection unit, for illuminating the surface if the object (11);
Adapting the shape of the surface (14) of said object (11) in dependency of data representing form changes of a reference object; and
Adapting the light illuminating the surface (14) of the object (11) in dependency of said data representing form changes of the reference object.

14. Computer program product for executing a method according to claim 13.

## Patentansprüche

1. Vorrichtung (100) zur 3D-Formerzeugung,
die mindestens aufweist
mehrere hohle Formänderungselemente (3, 31),
wobei die Formänderungselemente (3, 31, 32) stapelartig angeordnet sind,
eine Hauptaufnahmeeinrichtung (2) zur Bereitstellung eines Materials, das zu den Formänderungselementen (3, 31, 32) fließen kann,
wobei zumindest die Mehrzahl der Formänderungselemente (3, 31, 32) die Hauptaufnahmeeinrichtung (2) umgibt,
wobei jedes Formänderungselement (3, 31, 32) mit der Hauptaufnahmeeinrichtung (2) verbunden ist,
eine Aktuatoreinheit (1) zum Bewirken eines Materialtransfers des von der Hauptaufnahmeeinrichtung (2) oder durch die Hauptaufnahmeeinrichtung (2) fließfähigen Materials in den Hohlraum der Formänderungselemente (3, 31, 32) zum Anpassen der Außenfläche (14) eines durch die Formänderungselemente (3, 31, 32) aufgestellten Objekts (11)
und
**dadurch gekennzeichnet, dass** eine Projektionseinheit bereitgestellt wird,
wobei die Projektionseinheit mehrere Projektionsvorrichtungen (5, 6, 7, 8) zum Projizieren von Licht auf die Außenfläche (14) des durch den Stapel von Formänderungselementen (3, 31, 32) aufgebauten Objekts (11) aufweist,
wobei die Projektionen auf die von dem Stapel von Formänderungselementen (3, 31, 32) erzeugte Oberfläche (14) des Objekts (11) in Abhängigkeit von Koordinaten der genannten Oberfläche aufgebracht werden können.

2. Vorrichtung gemäß Anspruch 1,
**dadurch gekennzeichnet, dass**
die Formänderungselemente (3, 31, 32) aus einem elastischen Material, insbesondere einem Polymermaterial, bestehen,
die Formänderungselemente (3, 31, 32) einzeln mit der Hauptaufnahmeeinrichtung (2) verbunden oder verbindbar sind und
die Formänderungselemente (3, 31, 32) derart gestapelt sind, dass die Mehrzahl der Formänderungselemente (3, 31, 32) an zwei weiteren Formänderungselementen anliegt, wobei ein weiteres Formänderungselement (31) in axialer Richtung des Stapels an einem oberen Abschnitt des Formänderungselementes (3) anliegend angeordnet ist und wobei ein zweites weiteres Formänderungselement (32) in axialer Richtung des Stapels an einem unteren Abschnitt des Formänderungselementes (3) anliegend angeordnet ist.

3. Vorrichtung gemäß Anspruch 1 oder Anspruch 2,
**dadurch gekennzeichnet, dass**
mindestens 10 oder mindestens 20 oder mindestens 50 oder mindestens 100 Formänderungselemente (3, 31, 32) bereitgestellt und gestapelt sind,
wobei sich jedes Formänderungselement (3, 31, 32) in axialer Richtung weniger als 5 mm, insbesondere weniger als 3 mm oder weniger als 1,5 mm oder weniger als 1 mm oder weniger als 0,5 mm oder weniger als 0,1 mm oder weniger als 0,05 mm erstreckt.

4. Vorrichtung gemäß einem der vorhergehenden Ansprüche,
**dadurch gekennzeichnet, dass**
das fließfähige Material ein Fluid ist, insbesondere ein flüssiges Material wie Öl oder Wasser oder ein gasförmiges Material wie Luft.

5. Vorrichtung gemäß einem der vorhergehenden Ansprüche,
**dadurch gekennzeichnet, dass**
jedes Formänderungselement (3, 31, 32) eine Membran aufweist oder ausbildet, um ein Umkippen des fließfähigen Materials zu verhindern und/oder
die Formänderungselemente (3, 31, 32) in radialer Richtung expandieren oder schrumpfen.

6. Vorrichtung gemäß einem der vorhergehenden Ansprüche,
**dadurch gekennzeichnet, dass**
eine Steuereinheit bereitgestellt ist,
wobei die Steuereinheit eine Ventileinheit und/oder die Aktuatoreinheit (1) steuert,
wobei die Steuereinheit den Materialfluss in und/oder aus mehreren Änderungselementen (3, 31, 32) gleichzeitig steuert,
wobei die Ventileinheit und/oder die Aktuatoreinheit in Abhängigkeit von einem Datensatz gesteuert wird, der die Form der äußeren Oberfläche eines Referenzobjekts repräsentiert,
wobei der Datensatz Daten bereitstellt, die mit dem Verformungs- oder Füllzustand einzelner Formänderungselemente (3, 31, 32) verknüpft sind.

7. Vorrichtung gemäß einem der vorhergehenden Ansprüche,
**dadurch gekennzeichnet, dass**
die projizierenden Vorrichtungen (5, 6, 7, 8) in definierter Weise um das durch den Stapel von Formänderungselementen (3, 31, 32) erzeugte Objekt (11) angeordnet sind.

8. Vorrichtung gemäß einem der vorhergehenden Ansprüche,
**dadurch gekennzeichnet, dass**
eine Datenquelle bereitgestellt wird,
wobei die Datenquelle Quelldaten bereitstellt,
wobei die Quelldaten aufweisen:
- Datensatz, der die Form der Außenfläche und/oder deren Modifikationen repräsentiert, und
- Foto- oder Videodaten, die auf das durch den Stapel von Formänderungselementen (3, 31, 32) erzeugte Objekt zu projizieren sind.

9. Vorrichtung gemäß Anspruch 8,
**dadurch gekennzeichnet, dass**
die Datenquelle eine Kommunikationseinheit (15) zum Übertragen von Daten über einen Kommunikationsweg, insbesondere das Internet, vorzugsweise in Echtzeit, ist
oder
einen Datenträger.

10. Vorrichtung gemäß einem der vorhergehenden Ansprüche,
**dadurch gekennzeichnet, dass**
die Steuereinheit die Projektionsvorrichtungen (5, 6, 7, 8) und die Aktuatoreinheit (1) und/oder Ventileinheit synchron steuert, wobei durch den Stapel von Formänderungselementen (3, 31, 32) erzeugte Änderungen der Form der Außenfläche (14) des Objekts (11) zu Änderungen der Projektion führen oder umgekehrt.

11. System zur 3D-Darstellung eines Objekts (11) mit dynamischen Änderungen der Form seiner äußeren Oberfläche,
das mindestens aufweist
eine Vorrichtung zur 3D-Formgenerierung (100) gemäß einem der Ansprüche 1 bis 10,
wobei die Vorrichtung (100) ein Objekt (11) mit einer Außenfläche (14) bereitstellt,
wobei die Form der Oberfläche (14) des Objekts (11) in Abhängigkeit von Daten angepasst wird, die Formänderungen eines Referenzobjekts repräsentieren,
eine Beleuchtungseinheit, insbesondere eine Projektionseinheit,
wobei die Oberfläche (14) des Objekts (14) durch die Beleuchtungseinheit in Abhängigkeit von den Daten, die Formänderungen des Referenzobjekts repräsentieren, beleuchtet wird.

12. System gemäß Anspruch 11,
**dadurch gekennzeichnet, dass**
die Daten, die Formveränderungen des Referenzobjekts repräsentieren, über einen Kommunikationsweg, insbesondere das Internet oder eine Telefon- oder TV-Signalleitung, empfangen werden,
wobei Foto- oder Videodaten, die die Farben und/oder Schattierungen des Objekts repräsentieren, ebenfalls über diesen Kommunikationsweg (15) übertragen werden,
wobei die Beleuchtungseinheit die Objektoberfläche in Abhängigkeit von den Foto- oder Videodaten beleuchtet.

13. Verfahren zur Erzeugung eines dynamischen 3D-Objekts,
Bereitstellen einer Vorrichtung zur 3D-Formgenerierung (100) gemäß einem der Ansprüche 1 bis 10, wobei die Vorrichtung (100) ein Objekt (11) mit einer Außenfläche (14) bereitstellt;
Bereitstellen einer Beleuchtungseinheit, insbesondere einer Projektionseinheit, zum Beleuchten der Oberfläche des Objekts (11);
Anpassen der Form der Oberfläche (14) des Objekts (11) in Abhängigkeit von Daten, die Formänderungen eines Referenzobjekts repräsentieren; und
Anpassen des Lichts, das die Oberfläche (14) des Objekts (11) beleuchtet, in Abhängigkeit von den Daten, die Formveränderungen des Referenzobjekts repräsentieren.

14. Computerprogrammprodukt zum Ausführen eines Verfahrens gemäß Anspruch 13.

## Revendications

1. Dispositif (100) pour la génération de formes 3D,
comprenant au moins
de multiples éléments creux de changement de forme (3, 31),
dans lequel les éléments de changement de forme (3, 31, 32) sont disposés à la manière d'une pile,
un moyeu principal (2) pour fournir un matériau qui est capable de s'écouler vers les éléments de changement (3, 31, 32),
dans lequel au moins la majorité des éléments de changement de forme (3, 31, 32) entoure le moyeu principal (2),
dans lequel chaque élément de changement de forme (3, 31, 32) est relié au moyeu principal (2),
une unité d'actionnement (1) pour provoquer un transfert de matériau du matériau qui peut s'écouler du moyeu principal (2) ou à travers le moyeu principal (2) vers la section creuse des éléments de changement de forme (3, 31, 32) pour adapter la surface extérieure (14) d'un objet (11) mis en place par les éléments de changement de forme (3, 31, 32)
et
**caractérisé en ce qu'**une unité de projection est prévue,
dans laquelle l'unité de projection comprend plusieurs dispositifs de projection (5, 6, 7, 8) pour projeter de la lumière sur la surface extérieure (14) de l'objet (11) générée par la pile d'éléments de changement de forme (3, 31, 32),
dans lequel les projections peuvent être appliquées à la surface (14) de l'objet (11) généré par la pile d'éléments de changement de forme (3, 31, 32) en fonction des coordonnées de ladite surface.

2. Dispositif selon la revendication 1,
**caractérisé en ce que**
les éléments de changement de forme (3, 31, 32) sont en matériau élastique, notamment en matériau polymère,
les éléments de changement de forme (3, 31, 32) sont individuellement connectés ou connectables au moyeu principal (2) et
les éléments de changement de forme (3, 31, 32) sont empilés de telle manière que la plupart des éléments de changement de forme (3, 31, 32) sont en contact avec deux autres éléments de changement de forme, dans lequel un autre élément de changement de forme (31) est disposé dans la direction axiale de la pile en contact avec une section supérieure de l'élément de changement de forme (3) et dans lequel un deuxième autre élément de changement de forme (32) est disposé dans la direction axiale de la pile en contact avec une section inférieure de l'élément de changement de forme (3).

3. Dispositif selon la revendication 1 ou la revendication 2,
**caractérisé en ce que**
au moins 10 ou au moins 20 ou au moins 50 ou au moins 100 éléments de changement de forme (3, 31, 32) sont prévus et empilés,
dans lequel chaque élément de changement de forme (3, 31, 32) s'étend dans la direction axiale sur moins de 5 mm, en particulier moins de 3 mm ou moins de 1,5 mm ou moins de 1 mm ou moins de 0,5 mm ou moins de 0,1 mm ou moins de 0,05 mm.

4. Dispositif selon l'une quelconque des revendications précédentes,
**caractérisé en ce que**
le matériau susceptible de s'écouler est un fluide, notamment un matériau liquide comme l'huile ou l'eau ou un matériau gazeux comme l'air.

5. Dispositif selon l'une quelconque des revendications précédentes,
**caractérisé en ce que**
chaque élément de changement de forme (3, 31, 32) comprend ou forme une membrane pour empêcher l'écoulement de la matière fluide et/ou
les éléments de changement de forme (3, 31, 32) se dilatent ou se rétractent dans le sens radial.

6. Dispositif selon l'une quelconque des revendications précédentes,
**caractérisé en ce que**
une unité de commande est prévue,
dans lequel l'unité de commande commande une unité de vanne et/ou l'unité d'actionneur (1),
dans lequel l'unité de commande commande le flux de matériau dans et/ou à partir de plusieurs éléments de changement (3, 31, 32) en même temps,
dans lequel l'unité de vanne et/ou l'unité d'actionneur est commandée en fonction d'un ensemble de données représentant la forme de la surface extérieure d'un objet de référence,
dans lequel l'ensemble de données fournit des données liées à l'état de déformation ou de remplissage des éléments de changement de forme individuels (3, 31, 32).

7. Dispositif selon l'une quelconque des revendications précédentes,
**caractérisé en ce que**
les dispositifs de projection (5, 6, 7, 8) sont disposés de manière définie autour de l'objet (11) généré par la pile d'éléments de changement de forme (3, 31, 32).

8. Dispositif selon l'une quelconque des revendications précédentes,
**caractérisé en ce que**
une source de données est prévue,
dans lequel la source de données fournit des données sources,
dans lequel les données sources comprennent :
- l'ensemble des données représentant la forme de la surface extérieure et/ou ses modifications et
- des données photo ou vidéo à projeter sur l'objet généré par la pile d'éléments de changement de forme (3, 31, 32).

9. Dispositif selon la revendication 8,
**caractérisé en ce que**
la source de données est une unité de communication (15) pour transférer des données via une voie de communication, notamment Internet, de préférence en temps réel
ou
un support de données.

10. Dispositif selon l'une quelconque des revendications précédentes,
**caractérisé en ce que**
l'unité de commande commande les dispositifs de projection (5, 6, 7, 8) et l'unité d'actionnement (1) et/ou l'unité de vanne de manière synchrone, les modifications de la forme de la surface extérieure (14) de l'objet (11) générées par l'empilement d'éléments de changement de forme (3, 31, 32) entraînant des modifications de la projection ou inversement.

11. Système de représentation 3D d'un objet (11) ayant des changements dynamiques de la forme de sa surface extérieure,
comprenant au moins
un dispositif de génération de formes 3D (100) selon l'une quelconque des revendications 1 à 10,
dans lequel le dispositif (100) fournit un objet (11) ayant une surface extérieure (14),
dans lequel la forme de la surface (14) dudit objet (11) est adaptée en fonction de données représentant des changements de forme d'un objet de référence,
une unité d'illumination, en particulier une unité de projection,
dans lequel la surface (14) de l'objet (14) est éclairée par l'unité d'éclairage en fonction desdites données représentant des changements de forme de l'objet de référence.

12. Système selon la revendication 11,
**caractérisé en ce que**
les données représentant les changements de forme de l'objet de référence sont reçues sur un chemin de communication, en particulier l'Internet ou une ligne téléphonique ou une ligne de signal de télévision,
dans lequel des données photo ou vidéo représentant les couleurs et/ou les nuances dudit objet sont également transférées via ce chemin de communication (15),
dans lequel l'unité d'illumination illumine la surface de l'objet en fonction desdites données photo ou vidéo.

13. Méthode pour générer un objet 3D dynamique,
Fournir un dispositif de génération de forme 3D (100) selon l'une quelconque des revendications 1 à 10,
dans lequel le dispositif (100) fournit un objet (11) ayant une surface extérieure (14) ;
Fournir une unité d'éclairage, en particulier une unité de projection, pour éclairer la surface de l'objet (11) ;
adapter la forme de la surface (14) dudit objet (11) en fonction de données représentant des changements de forme d'un objet de référence ; et
adapter la lumière éclairant la surface (14) de l'objet (11) en fonction desdites données représentant les changements de forme de l'objet de référence.

14. Produit programme d'ordinateur pour exécuter une méthode selon la revendication 13.
